# EUROPEAN PATENT SPECIFICATION

(11) **EP 3 763 957 B1**
(45) Date of publication and mention of the grant of the patent: **10.05.2023**
(21) Application number: 19765049.2
(22) Date of filing: 27.02.2019
(51) Int. Cl.: F16C 33/56, F03D 80/70, F16C 33/51

(54) **ROLLER BEARING AND RETAINER FOR ROLLER BEARING**
ROLLLAGER UND HALTERUNG FÜR ROLLLAGER
ROULEMENT À ROULEAUX ET DISPOSITIF DE RETENUE POUR ROULEMENT À ROULEAUX

(30) Priority: 05.03.2018 JP 2018038734
(43) Date of publication of application: 13.01.2021
(73) Proprietor: NTN Corporation, Osaka-shi, Osaka 550-0003 (JP)
(72) Inventor: ITO Tomohito, Kuwana-shi, Mie 511-8678 (JP)
(74) Representative: Grünecker Patent- und Rechtsanwälte PartG mbB
(86) International application number: PCT/JP2019/007539
(87) International publication number: WO 2019/172039

(56) References cited:
- JP-A- 2007 092 983
- JP-A- 2007 303 601
- JP-A- 2007 303 601
- JP-A- 2008 298 272
- JP-A- 2010 048 342
- JP-A- 2010 048 342
- JP-A- 2016 153 674
- JP-A- 2016 153 674

## Description

### TECHNICAL FIELD

The present invention relates to a roller bearing, and a cage used in a roller bearing, and constituted by a plurality of annularly disposed cage segments.

### BACKGROUND ART

As a relatively large-sized roller bearing, e.g., used to support a main shat of a wind power generator, a roller bearing is generally known which includes a plurality of cage segments circumferentially continuously disposed between the outer ring and the inner ring.

The cage segments of such a roller bearing are mounted one by one between the inner ring and the outer ring with no gaps defined between the circumferentially adjacent cage segments, except a gap defined between the firstly mounted cage segment and the lastly mounted cage segment (this gap is hereinafter sometimes referred to as the "final gap"). The circumferential dimension of such a final gap is, at room temperature, set to be more than 0.075% and less than 0.12% of the circumference of the circle passing through the centers of the cage segments (below-identified Patent Document 1).

Such a final gap is maintained even during use of the bearing, but shrinks when the bearing temperature rises and exceeds room temperature, because the linear expansion coefficient of the resin forming the cage segments is normally 1.3 × 10⁻⁵/°C to 1.7 × 10⁻⁵/°C, and is thus larger than the coefficient of linear expansion of the steel material forming the inner and outer rings.

Therefore, when assembling the roller bearing by circumferentially disposing the cage segments with no gaps therebetween (except the final gap defined between the firstly mounted cage segment and the lastly mounted cage segment), the final gap is adjusted, in view of the fact that the final gap shrinks during use of the bearing, to a size larger than the minimum size necessary when the bearing is actuated at room temperature. This is necessary because, if the gap gradually shrinks and eventually completely disappears during use of the bearing, the cage segments are circumferentially pushed against each other and deformed, so that the rolling bearing cannot rotate smoothly, and its rotation becomes unstable.

However, if too large a final gap is defined when the bearing is assembled, while the bearing is rotating at a low speed, e.g., when the bearing starts to rotate, the cage segments adjacent to each other via the gap move in directions to close the gap, and collide against each other, due to gravity. This movement is transferred to the other cage segments. The larger the gap, the larger the impact of the collisions. Especially in a large-sized roller bearing such as a roller bearing for supporting a main shaft of a wind power generator, relatively large collision sounds tend to occur, and/or some of the cage segments tend to be damaged or deformed, thereby reducing the service life of the bearing.

For example, in order to prevent collisions between cage segments of a large-sized roller bearing in the main shaft support structure of a wind power generator, it is known to adjust the coefficient of linear expansion of the cage segments made of a resin containing, e.g., carbon fibers or glass fibers to 1 × 10-⁵/°C to 3 × 10-⁵/°C, and adjust the "final gap" at room temperature to more than 0.075% and less than 0.12% of the circumference of the circle passing through the centers of the cage segments (below-identified Patent Document 2, disclosing the preamble of independent claim 1 of the present application).

In order to, similarly to the above, prevent collision sounds due to collisions between cage segments of a roller bearing, and damage to cage elements, by adding not only a fibrous filler but also a granular inorganic filler to the resin material forming the cage segments, it is possible to adjust the coefficient of linear expansion of the resin cage segments in all directions, i.e., not only in the direction parallel to the fibers but also in directions perpendicular to the fibers (below-identified Patent Document 3).

Patent document 4 discloses a further example of a rolling bearing. Here, a cage is formed of an aromatic polyamide resin composition containing aluminum borate whisker subjected to surface treatment by using a silane coupling agent at a rate of 30-70 mass%.

### PRIOR ART DOCUMENTS

### Patent documents

Patent document 1: Japanese Unexamined Patent Application Publication No. 2008-298272
Patent document 2: Japanese Unexamined Patent Application Publication No. 2010-048342
Patent document 3: Japanese Unexamined Patent Application Publication No. 2016-153674
Patent document 4: JP 2007 303601 A

### SUMMARY OF THE INVENTION

### PROBLEMS TO BE SOLVED BY THE INVENTION

However, in the above-described conventional techniques, when the bearing temperature of the roller bearing rises during use of the roller bearing, since the linear expansion coefficient of the cage segments, which is made of a resin, is larger than the coefficient of linear expansion of the inner and outer rings, which are both made of a steel material, the "final gap" unavoidably shrinks as the bearing temperature rises during use of the bearing.

Therefore, the roller bearing needs to have an excessively large "final gap" at room temperature, and such an excessively large final gap tends to result in collision sounds due to collisions between cage segments, and/or early failure due to damage to cage elements.

It is an object of the present invention to provide a roller bearing which is free of the above-described conventional problems, and in which, by reducing, from the beginning of use of the bearing, collision sounds due to collisions between cage segments, and/or early failure due to damage to the cage elements, it is possible to reduce collision sounds due to collisions between cage segments made of resin, and damage to cage elements, thereby ensuring stable function of the cage during use of the bearing, especially such a roller bearing which can be used as a large-sized roller bearing for supporting, e.g., a main shaft of a wind power generator.

### MEANS FOR SOLVING THE PROBLEMS

The present invention, achieving the above object, is defined in the independent claims. Preferred embodiments are laid down in the dependent claims.

In the roller bearing, the plurality of cage segments are circumferentially arranged such that a gap R > 0 is defined, at the lower limit value (-40°C) of the predetermined temperature range, between the firstly mounted cage segment and the lastly mounted cage segment of the cage segments, and such that no gap is defined between any adjacent pair of the cage segments except between the firstly mounted cage segment and the lastly mounted cage segment. Also, the amount by which the cage segments thermally expand is adjusted such that the circumferential dimension of the gap R is, at the upper limit value (150°C) of the predetermined temperature range, less than 0.12% of the circumference of the circle passing through the centers of the cage segments of the annular cage in the radial thickness directions of the cage segments.

The firstly mounted cage segment refers to the cage segment that is mounted first when the cage segments are mounted one by one so as to be circumferentially continuously arranged into an annular shape. The lastly mounted cage segment refers to the cage segment that is mounted last when the cage segments are mounted one by one so as to be circumferentially continuously arranged by bringing each cage segment into abutment with the adjacent cage segment. The cage segments are mounted in the roller bearing so as to be circumferentially continuously arranged to constitute a single annular cage.

Since the roller bearing of the present invention has, at the lower limit value of the predetermined bearing use temperature range, a minimum final gap necessary to mount the cage segments, the roller bearing is, from the beginning of use of the bearing, free of unnecessary or undesirable movements, such as a fall of cage segments due to gravity. Also, it is possible to reduce collision sounds due to collisions between cage segments, and damage to cage elements.

Also, since the cage segments are made of a resin containing a thermally expandable filler such that the resin and the filler have, in combination, a coefficient of linear expansion of less than 1.0 × 10⁻⁵/°C, the amount by which the cage segments expand as the bearing temperature rises is smaller than the coefficient of linear expansion of the inner and outer rings both made of a steel material (1.0 × 10⁻⁵/°C being considered to be the lowest value of the linear expansion coefficient of the inner and outer rings). Therefore, the final gap increases until the bearing temperature reaches a steady state.

By determining the linear expansion coefficient of the cage segments in this manner, even if the bearing temperature reaches the upper limit value of the predetermined temperature range (150°C), the circumferential dimension of the gap is limited to less than 0.12% of the circumference of the circle passing through the center of the annular cage in the radial thickness direction thereof. Therefore, the cage segments, made of a resin, can stably function as a cage during use of the bearing. In particular, collision sounds due to collisions between cage segments are less likely to arise, and the cage elements are less likely to be damaged.

In order to reduce, as much as possible, unnecessary or undesirable movements of the bearing which may result in collisions between cage segments, the circumferential dimension of the gap R is, at the lower limit value of the predetermined temperature range, more than 0 and 0.075 % or less of the circumference of the circle passing through the centers of the cage segments of the annular cage in the radial thickness directions of the cage segments.

As the thermally expandable filler added to the resin forming the cage segments, any thermally expandable filler such as a known fibrous one may be used which has a coefficient of linear expansion which is less than the coefficient of linear expansion of the steel material forming the outer ring and the inner ring. Such a thermally expandable filler may comprise carbon fibers and/or glass fibers.

The filling rate of the thermally expandable filler may be about 20% by weight or more and 40% by weight or less. The roller bearing of the present invention can solve the above-described problems seen in large-sized roller bearings, and thus can be used as, e.g., a roller bearing for supporting a main shaft of a wind power generator.

By using, in the above-described roller bearing, a cage comprising a plurality of cage segments circumferentially continuously arranged into an annular shape, even if the roller bearing is a large-sized one, it is possible to prevent, from the beginning of use of the roller bearing, collision sounds due to collisions between cage segments, and early failure due to damage to cage elements.

### EFFECTS OF THE INVENTION

In the present invention, the cage segments of the roller bearing used at predetermined bearing temperatures are made of a resin containing a thermally expandable filler, and having, in combination with the filler, a coefficient of linear expansion of less than a predetermined value; a gap is defined between the firstly mounted cage segment and the lastly mounted cage segment such that, at the lower limit value of the predetermined temperature range, the gap has a minimum size necessary to mount the cage segments, and at the upper limit value of the predetermined temperature range, the dimension of the gap is less than a predetermine value. Therefore, it is possible to prevent, from the beginning of use of the roller bearing, collision sounds due to collisions between cage segments, and early failure due to damage to cage elements, so that it is possible to prevent collision sounds due to collisions between cage segments, and/or damage to cage elements, thereby ensuring that the resin cage segments stably function as a cage.

The roller bearing of the present invention is especially suited for use as a roller bearing for supporting a main shaft of a wind power generator. By using the above-described cage segments as a cage in the roller bearing, it is possible to ensure the above-described advantageous effects.

### BRIEF DESCRIPTION OF THE DRAWINGS

Fig. 1 is an enlarged sectional view of a tapered roller bearing embodying the present invention, illustrating a gap between a firstly mounted cage segment and a lastly mounted cage segment.
Fig. 2 is a perspective view of a cage segment used in the tapered roller bearing of the embodiment.
Fig. 3 is a sectional view taken along a plane orthogonal to the center axis of the tapered roller bearing of the embodiment.
Fig. 4 is a view illustrating how the tapered roller bearing of the embodiment is used as a roller bearing for supporting a main shaft of a wind power generator.

### BEST MODE FOR CARRYING OUT THE INVENTION

The embodiment of the present invention is now described with reference to the attached drawings.

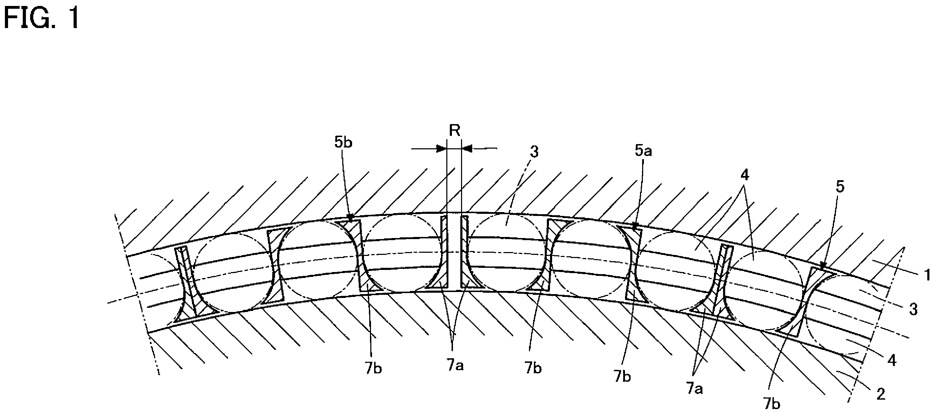

As illustrated in Figs. 1 to 3, the tapered roller bearing of the embodiment includes an inner ring 1 and an outer ring 2 both made of a steel material; a plurality of tapered rollers 3 disposed between the outer ring 1 and the inner ring 2; pockets 4 in which the respective tapered rollers 3 are received; and a plurality of cage segments 5 made of a resin, and circumferentially continuously arranged into an annular shape, between the inner ring 1 and the outer ring 2. The resin forming the cage segments 5 contains a predetermined amount of a predetermined thermally expandable filler such that the resin and the filler have, in combination, a coefficient of linear expansion of less than 1.0 × 10⁻⁵/°C (the symbol "a"is hereinafter sometimes used to indicate the coefficient of linear expansion).

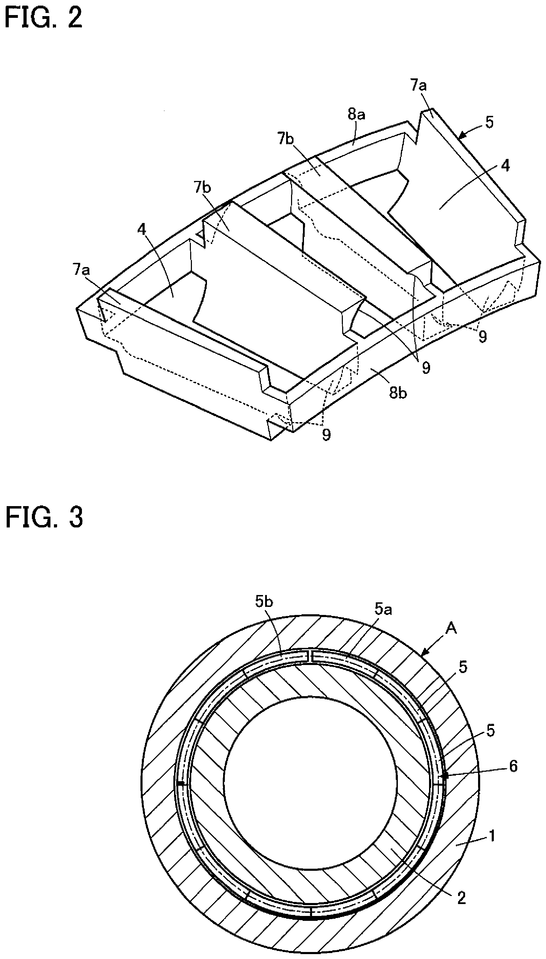

As illustrated in Fig. 2, the cage segments 5 each constitutes one unit of an annular cage 6 (shown in Fig. 3). In particular, the cage segments 5 (twelve in the shown example) are formed by dividing the annular cage 6 at equal angular intervals around the rotational axis of the bearing along planes including this rotational axis. The cage segments 5 each includes one or more (three in the shown example) of the pockets 4, in which the respective tapered rollers 3 are received.

Each cage segment 5 includes pillars 7a and 7b with two of the pillars 7a and/or 7b disposed on both sides of each pocket 4, which has a plurality of openings. Each pillar 7a integrally has a flat surface and a circular arc-shaped claw portion 9 that are arranged in a back-to-back relationship. Each pillar 7b integrally has surfaces including circular arc-shaped claw portions 9, and arranged in a back-to-back relationship. The pillars 7a and 7b of each cage segment 5 have first longitudinal ends thereof coupled together via a coupling portion 8a, and have second longitudinal ends thereof coupled together via a coupling portion 8b. Each tapered roller 3 is prevented from moving out of the pocket 4 while the tapered roller is rotating, and is rotatably retained, by two of the circular arc-shaped claw portions 9 that are opposed to each other at positions closer to the outer ring 1 or the inner ring 2.

In this way, the tapered rollers 3 are prevented from moving out of the pockets 4 by the circular arc-shaped claw portions 9, and rotatably roll while being in contact with the raceway surfaces of the outer ring 1 and the inner ring 2.

In this embodiment, with the cage segments 5 circumferentially disposed to constitute the annular cage 6 of the tapered roller bearing A (see Fig. 3), a gap R (see Fig. 1) is defined, at the lower limit value of the bearing use temperature range, between the flat surfaces of the firstly mounted cage segment 5a, i.e., one of the cage segments that is mounted first, and the lastly mounted cage segment 5b, i.e., the cage segment that is mounted last. Further, the amount by which the cage segments 5 thermally expand is limited such that the circumferential dimension of the gap R at the upper limit value of the bearing use temperature range is less than 0.12% of the circumference of the circle passing through the centers of the annular cage segments 5 in the radial thickness directions thereof.

In the tapered roller bearing of the embodiment, at the lower limit value of the bearing use temperature range, i.e., -40°C, the "final" gap R, i.e., the gap defined between the firstly mounted cage segment 5a and the lastly mounted cage segment 5b, is determined to a minimum size necessary to mount these cage segments.

The circumferential dimension of the gap R at the lower limit value of the above predetermined temperature range is more than 0 and 0.075% or less of the circumference of the circle passing through the centers of the cage segments 5.

By adjusting the gap R in this manner, the tapered roller bearing of the embodiment is, from the beginning of use of the bearing, free of unnecessary or undesirable movements, such as a fall of cage segments 5 at specific positions due to gravity. It is also possible to reduce collision sounds due to collisions of cage segments 5 against each other, and damage to the cage elements.

The temperature of the bearing rises to a certain temperature after the bearing starts to operate, and then, after a certain period of time, reaches a steady state at a temperature slightly lower than the above certain temperature. The time it takes for the bearing temperature to reach the steady state depends on the size and rotational speed of the bearing, and how the bearing is lubricated, but is normally 20 minutes to several hours. The bearing temperature in the steady state is normally higher by about 10 to 40°C than normal temperature or room temperature, and the bearing is preferably used at 100°C or less.

Parts of roller bearings including the outer ring 1, the inner ring 2, and normally the tapered rollers 3 are made of a steel material. For example, for a large-sized tapered roller bearing, a surface-quenched steel (carburized steel) or a high-frequency quenched steel such as nickel-chromium-molybdenum steel, chromium steel, or chromiummolybdenum steel is suitable as the steel material to provide appropriate hardness and toughness. Also, examples of general bearing materials include a high/medium carbon alloy steel such as high carbon chromium bearing steel, and an anti-corrosion bearing steel such as stainless steel.

The coefficients of linear expansion of these steel materials are about 1.2 × 10⁻⁵/°C (about 1.5 × 10⁻⁵/°C for S30C for example). While the larger the carbon content, the smaller the coefficient of linear expansion, tends to be, the coefficient of linear expansion of a surface-quenched steel used as a bearing material is about 1.12 × 10⁻⁵/°C.

The cage segments 5 are made of a resin, and injection-moldable high polymer materials are used widely for practical necessities. For example, an aliphatic polyamide resin or an aromatic polyamide resin reinforced with well-known glass fibers may be also used as the material forming the cage. A cage made of such a polyamide resin can be continuously used at a temperature of -40 to 120°C.

Other resin materials which can be used for the cage include, for example, polyacetal (POM), polybutylene terephthalate (PBT), polyethylene terephthalate (PET), syndiotactic polystyrene (SPS), polyphenylene sulfide (PPS), polyether ether ketone (PEEK), liquid crystal polymer (LCP), fluororesin, polyether nitrile (PEN), polycarbonate (PC), modified polyphenylene ether (mPPO), polysulfone (PSF), polyethersulfone (PES), polyarylate (PAR), polyamideimide (PAI), polyetherimide (PEI), and thermoplastic polyimide (PI).

Of these resins, polyphenylene sulfide (PPS) resin, polyether ether ketone (PEEK) resin, etc. are preferable in view of injection moldability, slidability, durability, etc.

The cage segments 5 contain a thermally expandable filler, and the coefficient of linear expansion of the cage segments is adjusted to less than 1.0 × 10⁻⁵/°C by adjusting, e.g., the amount of the thermally expandable filler added.

The cage segments may contain any thermally expandable filler having a coefficient of linear expansion which is less than the coefficient of linear expansion of the steel material forming the outer ring and the inner ring. For example, if a surface-quenched steel is used for the inner and outer rings, the thermally expandable filler used should have thermal expandability (i.e., thermal expandability in the direction of the fibers, or linear expansion coefficient) of less than 1.12 × 10⁻⁵/°C, which is the linear expansion coefficient of the surface-quenched steel, or the thermally expandable filler used may have a coefficient of linear expansion of less than an even lower linear expansion coefficient of 1 × 10⁻⁵/°C, preferably a negative coefficient of linear expansion.

Preferably, a thermally expandable filler is used which is high in addition efficiency, i.e. which provides the expected results with a minimum addition of such filler. For example, carbon fibers have a negative coefficient of linear expansion (which means that they shrink in the direction of the fibers when heated), specifically, α = -0.5 × 10⁻⁵/°C to 0.6 × 10⁻⁵/°C; the coefficient of linear expansion of para-aromatic polyamide fibers is also negative and close to 0 (zero); and the linear expansion coefficient α of glass fibers is0.5 × 10⁻⁵/°C.

Moreover, beta eucryptite (LiAlSiO₄), bismuth iron-nickel oxide (BiNi_{1-X}Feₓ0₃), etc. are also well known as compounds having a negative coefficient of linear expansion, and may be used.

If polyamide (MC nylon), PEEK, POM, PPS or PEI is used as the resin material of the cage segments, and the content of the thermally expandable filler is 60%, the coefficient of linear expansion α of the cage segments will be about 2 × 10⁻⁵/°C to 4 × 10⁻⁵/°C if the filler is PAN-based carbon fibers; about -8 × 10⁻⁵/°C to -13 × 10⁻⁵/°C if the filler is pitch-based carbon fibers; and about -15 × 10⁻⁵/°C if filler is aromatic polyamide (aramid) fibers.

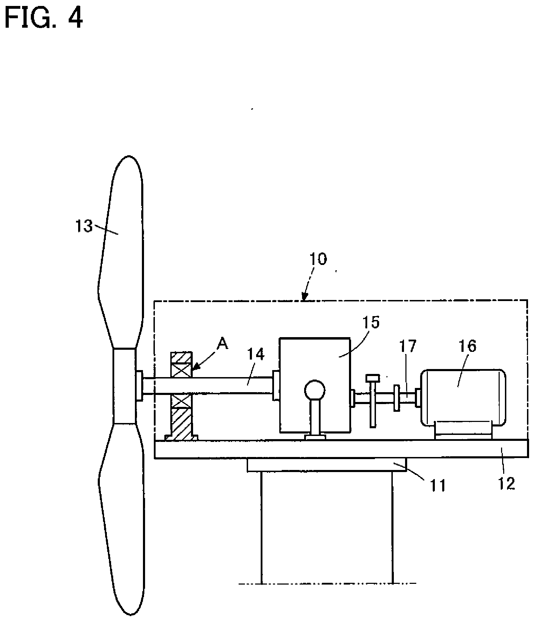

As illustrated in Fig. 4, the tapered roller bearing A of the embodiment can be used as a roller bearing for supporting a main shaft of a large-sized wind power generator. The large-sized wind power generator includes a nacelle 10 supporting main components of its main shaft support structure, and mounted on a support base 12 at a high position away from an installation surface so as to be turnable on a horizontal surface via a turn seat bearing 11.

The wind power generator includes blades 13 for receiving wind fixed to one end of the main shaft 14, and the main shaft 14 is rotatably supported via the tapered roller bearing A within the nacelle 10. The other end of the main shaft 14 is connected to a speed increaser 15 of which the output shaft is coupled to a rotor shaft 17 of a power generator unit 16.

While, in the above embodiment, carbon filers or glass fibers are exemplified as the filler contained in the resin of the cage segments, a mixture of these fibers may be used. Alternatively, a powdered filler such as carbon black, or a granular filler may be used. Also, while, in the above embodiment, tapered rollers are used as the rollers received in the cage segments, the rollers are not limited thereto, and may be, e.g., cylindrical rollers, needle rollers, or rod-shaped rollers.

In the main shaft support device of the wind power generator in which the tapered roller bearing A of the embodiment is used, it is possible, from the beginning of normal use of the bearing, to prevent collision sounds due to collisions between cage segments, and damage to cage elements, and the cage can stably function during use of the bearing. This shows that the tapered roller bearing of the present invention is durable enough to be used in a wind power generator while operating.

### INDUSTRIAL APPLICABILITY

The roller bearing of the present invention is suitable for use in the main shaft support structure of a wind power generator, and the cage according to the present invention is suitable for use in a relatively large-sized roller bearing. The roller bearing and the roller bearing cage of the present invention is especially suitable for use in situations in which it is required to reduce noise due to collisions between relatively large-sized cage segments, and improve the durability of the bearing.

### DESCRIPTION OF REFERENCE NUMERALS

1: Outer ring
2: Inner ring
3: Tapered roller
4: Pocket
5: Cage segment
5a: Firstly mounted cage segment
5b: Lastly mounted cage segment
6: Annular cage
7a, 7b: Pillar
8a, 8b: Coupling portion
9: Circular arc-shaped claw portion
10: Nacelle
11: Turn seat bearing
12: Support base
13: Blade
14: Main shaft
15: Speed increaser
16: Power generator unit
17: Rotor shaft
A: Tapered roller bearing
R: Gap

## Claims

1. A roller bearing for use at a bearing temperature within a predetermined temperature range of -40 to 150°C, the roller bearing comprising:
an outer ring (1) and an inner ring (2) both made of a steel material;
a plurality of rollers (3) disposed between the outer ring (1) and the inner ring (2);
pockets (4) in which the respective rollers (3) are received; and
a plurality of cage segments (5) circumferentially continuously arranged to form an annular cage (6) between the outer ring (1) and the inner ring (2), the cage segments (5) including a firstly mounted cage segment (5a) that is mounted first and a lastly mounted cage segment (5b) that is mounted last,
wherein the plurality of cage segments (5) are arranged such that a gap (R) is defined, at the lower limit value of the predetermined temperature range, between the firstly mounted cage segment (5a) and the lastly mounted cage segment (5b), and such that no gap is defined between any adjacent pair of the cage segments (5) except between the firstly mounted cage segment (5a) and the lastly mounted cage segment (5b), and
wherein a circumferential dimension of the gap (R) is, at the upper limit value of the predetermined temperature range, less than 0.12% of a circumference of a circle passing through centers of the cage segments (5) of the annular cage (6) in radial thickness directions of the cage segments (5),
**characterized in that**
the cage segments (5) are made of a resin containing a thermally expandable filler such that the resin and the thermally expandable filler have, in combination, a coefficient of linear expansion of less than 1.0 × 10⁻⁵/°C, and
the circumferential dimension of the gap (R) is, at the lower limit value of the predetermined temperature range, more than 0 and 0.075 % or less of the circumference of the circle passing through the centers of the cage segments (5) of the annular cage (6) in the radial thickness directions of the cage segments (5).

2. The roller bearing according to claim 1, wherein the thermally expandable filler has a coefficient of linear expansion which is less than a coefficient of linear expansion of the steel material forming the outer ring (1) and the inner ring (2).

3. The roller bearing according to claim 1 or 2, wherein the thermally expandable filler comprises at least carbon fibers or glass fibers.

4. The roller bearing according to claim 3, wherein a filling rate of the thermally expandable filler is 20% by weight or more and 40% by weight or less.

5. The roller bearing according to any of claims 1 to 4, wherein the roller bearing is a roller bearing (A) for supporting a main shaft of a wind power generator.

6. Use of the roller bearing according to any of claims 1 to 5 at a bearing temperature within a predetermined temperature range.

7. The use according to claim 6, wherein the predetermined temperature range is -40 to 150°C.

8. A cage as used in the roller bearing according to any of claims 1 to 5, and comprising a plurality of cage segments (5) circumferentially continuously arranged into an annular shape.

## Patentansprüche

1. Wälzlager zur Verwendung bei einer Lagertemperatur innerhalb eines vorgegebenen Temperaturbereichs von -40 bis 150 °C, wobei das Wälzlager umfasst:
einen Außenring (1) und einen Innenring (2), die beide aus einem Stahlmaterial hergestellt sind;
eine Vielzahl von Rollen (3), die zwischen dem Außenring (1) und dem Innenring (2) angeordnet sind;
Taschen (4), in denen die jeweiligen Rollen (3) aufgenommen sind; und
eine Vielzahl von Käfigsegmenten (5), die in Umfangsrichtung durchgehend angeordnet sind, um einen ringförmigen Käfig (6) zwischen dem Außenring (1) und dem Innenring (2) zu bilden, wobei die Käfigsegmente (5) ein zuerst montiertes Käfigsegment (5a) umfassen, welches zuerst montiert wird und ein zuletzt montiertes Käfigsegment (5b), welches zuletzt montiert wird,
wobei die Vielzahl der Käfigsegmente (5) so angeordnet sind, dass ein Abstand (R) bei dem unteren Grenzwert des vorgegebenen Temperaturbereichs zwischen dem zuerst montierten Käfigsegment (5a) und dem zuletzt montierten Käfigsegment (5b) definiert ist und so, dass kein Abstand zwischen jedem benachbarten Paar der Käfigsegmente (5) außer zwischen dem zuerst montierten Käfigsegment (5a) und dem zuletzt montierten Käfigsegment (5b) definiert ist, und
wobei eine Umfangsabmessung des Abstands (R) bei dem unteren Grenzwert des vorgegebenen Temperaturbereichs weniger als 0,12% eines Umfangs eines Kreises beträgt, der durch Mittelpunkte der Käfigsegmente (5) des ringförmigen Käfigs (6) in radialen Dickenrichtungen der Käfigsegmente (5) verläuft,
**dadurch gekennzeichnet, dass**
die Käfigsegmente (5) aus einem Harz hergestellt sind, welches ein thermisch expandierbares Füllmaterial umfasst, so dass das Harz und das thermisch expandierbare Füllmaterial in Kombination einen Längenausdehnungskoeffizienten von weniger als 1,0 × 10⁻⁵/°C aufweisen, und
die Umfangsabmessung des Abstands (R) bei dem unteren Grenzwert des vorgegebenen Temperaturbereichs mehr als 0 und 0,075% oder weniger des Umfangs des Kreises beträgt, der durch die Mittelpunkte der Käfigsegmente (5) des ringförmigen Käfigs (6) in den radialen Dickenrichtungen der Käfigsegmente (5) verläuft.

2. Das Wälzlager nach Anspruch 1, wobei das thermisch expandierbare Füllmaterial einen Längenausdehnungskoeffizienten aufweist, der geringer ist als ein Längenausdehnungskoeffizient des Stahlmaterials, welches den Außenring (1) und den Innenring (2) bildet.

3. Das Wälzlager nach Anspruch 1 oder 2, wobei das thermisch expandierbare Füllmaterial zumindest Kohlefasern oder Glasfasern umfasst.

4. Das Wälzlager nach Anspruch 3, wobei eine Füllmenge des thermisch expandierbaren Füllmaterials 20 Gewichtsprozent oder mehr und 40 Gewichtsprozent oder weniger beträgt.

5. Das Wälzlager nach einem der Ansprüche 1 bis 4, wobei das Wälzlager ein Wälzlager (A) zur Lagerung eine Hauptwelle einer Windkraftanlage ist.

6. Verwendung des Wälzlagers nach einem der Ansprüche 1 bis 5 bei einer Lagertemperatur innerhalb eines vorgegebenen Temperaturbereichs.

7. Die Verwendung nach Anspruch 6, wobei der vorgegebene Temperaturbereich -40 bis 150 °C beträgt.

8. Käfig, wie in dem Wälzlager nach einem der Ansprüche 1 bis 5 verwendet, und umfassend eine Vielzahl von Käfigsegmenten (5), die in Umfangsrichtung durchgehend in einer ringförmigen Form angeordnet sind.

## Revendications

1. Roulement à rouleaux destiné à être utilisé à une température de roulement comprise dans une plage de température prédéterminée de -40 °C à 150 °C, le roulement à rouleaux comprenant :
un anneau externe (1) et un anneau interne (2) constitués tous deux d'un matériau en acier ;
une pluralité de rouleaux (3) disposés entre l'anneau externe (1) et l'anneau interne (2) ;
des logements (4) dans lesquels sont reçus les rouleaux respectifs (3) ; et
une pluralité de segments de cage (5) agencés de manière continue sur la circonférence pour former une cage annulaire (6) entre l'anneau externe (1) et l'anneau interne (2), les segments de cage (5) comprenant un segment de cage monté en premier (5a) qui est monté le premier et un segment de cage monté en dernier (5b) qui est monté le dernier,
dans lequel les segments de la pluralité de segments de cage (5) sont agencés de telle sorte qu'un intervalle (R) est défini, à la valeur limite inférieure de la plage de température prédéterminée, entre le segment de cage monté en premier (5a) et le segment de cage monté en dernier (5b), et de telle sorte qu'aucun intervalle n'est défini entre toute paire de segments de cage adjacents (5), sauf entre le segment de cage monté en premier (5a) et le segment de cage monté en dernier (5b), et
dans lequel la dimension circonférentielle de l'intervalle (R) est, à la valeur limite supérieure de la plage de température prédéterminée, inférieure à 0,12 % de la circonférence d'un cercle passant par les centres des segments de cage (5) de la cage annulaire (6) dans les directions radiales de l'épaisseur des segments de cage (5),
**caractérisé en ce que**
les segments de cage (5) sont constitués d'une résine contenant un matériau de remplissage thermoexpansible, de telle sorte que la résine et le matériau de remplissage thermoexpansible présentent conjointement un coefficient de dilatation linéaire inférieur à 1,0 × 10⁻⁵/°C, et
la dimension circonférentielle de l'intervalle (R) est, à la valeur limite inférieure de la plage de température prédéterminée, supérieure à 0 et inférieure ou égale à 0,075 % de la circonférence du cercle passant par les centres des segments de cage (5) de la cage annulaire (6) dans les directions radiales de l'épaisseur des segments de cage (5).

2. Roulement à rouleaux selon la revendication 1, dans lequel le matériau de remplissage thermoexpansible présente un coefficient de dilatation linéaire qui est inférieur au coefficient de dilatation linéaire du matériau en acier formant l'anneau externe (1) et l'anneau interne (2).

3. Roulement à rouleaux selon la revendication 1 ou 2, dans lequel le matériau de remplissage thermoexpansible comprend au moins des fibres de carbone ou des fibres de verre.

4. Roulement à rouleaux selon la revendication 3, dans lequel le taux de remplissage du matériau de remplissage thermoexpansible est supérieur ou égal à 20 % en masse et inférieur ou égal à 40 % en masse.

5. Roulement à rouleaux selon l'une quelconque des revendications 1 à 4, dans lequel le roulement à rouleaux est un roulement à rouleaux (A) pour supporter l'axe principal d'une éolienne.

6. Utilisation du roulement à rouleaux selon l'une quelconque des revendications 1 à 5 à une température de roulement comprise dans une plage de température prédéterminée.

7. Utilisation selon la revendication 6, dans lequel la plage de température prédéterminée est comprise entre -40 °C et 150 °C.

8. Cage utilisée dans le roulement à rouleaux selon l'une quelconque des revendications 1 à 5, et comprenant une pluralité de segments de cage (5) agencés de manière continue sur la circonférence selon une forme annulaire.
